# EUROPEAN PATENT SPECIFICATION

(11) **EP 4 006 899 B1**
(45) Date of publication and mention of the grant of the patent: **06.09.2023**
(21) Application number: 20904249.8
(22) Date of filing: 10.12.2020
(51) Int. Cl.: G10L 15/22, G06F 16/33, G06F 40/35, G10L 15/18, G06F 16/332

(54) **SPEECH INTERACTION METHOD, SERVER AND SPEECH INTERACTION SYSTEM**
VERFAHREN ZUR SPRACHINTERAKTION, SERVER UND SYSTEM ZUR SPRACHINTERAKTION
PROCÉDÉ D'INTERACTION VOCALE, SERVEUR ET SYSTÈME D'INTERACTION VOCALE

(30) Priority: 17.08.2020 CN 202010827011
(43) Date of publication of application: 01.06.2022
(73) Proprietor: Guangzhou Chengxing Zhidong Motors Technology Co., Ltd., Guangzhou, Guangdong 510700 (CN); Guangzhou Xiaopeng Motors Technology Co., Ltd., Guangzhou 510640 (CN)
(72) Inventor: HAN, Chuanyu, Guangzhou, Guangdong 510700 (CN); YI, Hui, Guangzhou, Guangdong 510700 (CN); WENG, Zhiwei, Guangzhou, Guangdong 510700 (CN)
(74) Representative: Ran, Handong
(86) International application number: PCT/CN2020/135132
(87) International publication number: WO 2022/036944

(56) References cited:
- WO-A1-2018/212938
- CN-A- 107 316 643
- CN-A- 109 918 673
- CN-A- 110 096 567
- CN-A- 110 265 013
- CN-A- 112 000 787
- US-A1- 2014 257 794
- US-A1- 2015 142 420
- US-A1- 2016 188 565
- US-B1- 10 418 032

## Description

### Cross-references to related applications

The present application claims a priority to Chinese Patent Application No, CN202010827011.2, titled "Voice Interaction Method, Server and Voice Interaction System" filed on August 17, 2020 to the China National Intellectual Property Administration.

### TECHNICAL FIELD

The present disclosure relates to a field of voice technology, and more particularly, to a voice interaction method, a server and a voice interaction system.

### BACKGROUND

Currently, with the development of the Internet, a vehicle operating system of vehicles may conduct man-machine dialogues with a user to realize corresponding operations of the user. In the vehicle operating system capable of continuously listening without wakeup, the vehicle operating system executes user instructions steadily and reliably, and an ability of instruction words not to be rejected by mistake is a foundation of good user experience. Specifically, normal instructions issued by the user to the vehicle operating system should be executed, and abnormal instructions should be rejected.

The conversation in the vehicle operating system is generally continuous for multiple turns, including context and information. Therefore, instead of simply rejecting the instruction words of the user, the semantic rejection system should have the ability to judge the plurality of rounds of information, and then to select an appropriate processing method. A voice interaction method according to the preamble of claim 1 is e.g. known from US 2015/142420 A1 and US 10,418,032 B1, respectively. Similar methods are described in US 2014/257794 A1, WO 2018/212938A1 and US 2016/188565 A1.

### SUMMARY

The present invention provides a voice interaction method having the features of claim 1, a server having the features of claim 7 and a voice interaction system according to claim 13.

The voice interaction method according to embodiments of the present disclosure is applied in the server, and the voice interaction method includes: receiving multi-turn voice that is input in order of time and forwarded by a vehicle operating system, the multi-turn voice including a current turn of voice and one or more previous turns of voice; calculating a context score and a Natural Language Understanding (NLU) score of the current turn of voice in accordance with the multi-turn voice; obtaining a reply result or a rejection result of the current turn of voice in accordance with the current turn of voice and the context score and the NLU score of the current turn of voice; and performing a voice interaction between the vehicle operating system and a user in accordance with the reply result or the rejection result of the current turn of voice

According to embodiments of the present disclosure, said calculating the context score of the current turn of voice in accordance with the multi-turn voice includes: calculating a template context score of the current turn of voice in accordance with the one or more previous turns of voice; calculating a model context score of the current turn of voice in accordance with the multi-turn voice; and calculating the context score in accordance with the template context score and the model context score of the current turn of voice.

In some embodiments, the context score is calculated according to: A=α^{∗}B+(1-α)^{∗}C, where A represents the context score, B represents the model context score, C represents the template context score, and α represents a predetermined weight.

According to embodiments of the present disclosure, said calculating the template context score of the current turn of voice in accordance with the previous turns of voice includes: obtaining a domain score and an intent score of each of the one or more previous turns of voice; and calculating the template context score of the current turn of voice in accordance with the domain score and the intent score of each of the previous turns of voice.

According to embodiments of the present disclosure, said calculating the model context score of the current turn of voice in accordance with the multi-turn voice includes: performing word embedding on the multi-turn voice in accordance with a predetermined dimension to obtain a numerical matrix; performing a convolution process on the numerical matrix in accordance with a filter with a predetermined step to extract a plurality of word vectors; performing a max pooling process on the plurality of word vectors to obtain a plurality of low-dimensional word vectors; and fully connecting and classifying the plurality of low-dimensional word vectors to calculate the model context score of the current turn of voice.

In some embodiments, said calculating the NLU score of the current turn of voice in accordance with the multi-turn voice includes: processing the current turn of voice to obtain at least one domain of the current turn of voice; and determining the NLU score of the current turn of voice in accordance with the at least one domain of the current turn of voice.

In some implementation manners, said obtaining the reply result or the rejection result of the current turn of voice in accordance with the current turn of voice, and the context score and the NLU score of the current turn of voice includes: obtaining a list of NLU candidates for the current turn of voice according to the current turn of voice; calculating a similarity score of the list of NLU candidates for the current turn of voice in accordance with the context score and the NLU score of the current turn of voice; determining, based on the list of NLU candidates for the current turn of voice, the reply result of the current turn of voice from a predetermined reply index table, when the similarity score is greater than or equal to a predetermined value; and determining the rejection result of the current turn of voice, when the similarity score is smaller than the predetermined value.

In some embodiments, further including: performing polling confirmation in an order of values of the similarity scores, when the reply result of the current turn of voice includes a plurality of reply results.

In some embodiments, said performing the polling confirmation in the order of values of the similarity scores includes: replying with a reply result corresponding to a highest similarity score first; executing a corresponding instruction in response to obtaining a positive voice; replying with a reply result corresponding to a second highest similarity score in response to obtaining a negative voice.

The server according to embodiments of the present disclosure is defined as claimed in appended claim 7.

The voice interaction system according to embodiments of the present disclosure includes a vehicle and the server according to the above embodiments.

In the voice interaction method, the server and the voice interaction system as previously described, the context score and the NLU score of the current turn of voice are obtained by receiving multi-turn voice that is input in order of time and forwarded by the vehicle operating system; then the reply result or the rejection result of the current turn of voice is obtained; and the voice interaction between the vehicle operating system and the user is performed according to the reply result or the rejection result of the current turn of voice. As such, the vehicle operating system may be controlled to process the user's voice in an appropriate treatment, thereby reducing problems such as over-rejection and improving user experience.

Additional aspects and advantages of the present disclosure will be given in part in the following description, or become apparent in part from the following description, or can be learned from practicing of the present disclosure.

### BRIEF DESCRIPTION OF DRAWINGS

The above and/or additional aspects and advantages of the present disclosure will become more apparent and more understandable from the following description of embodiments taken in conjunction with the accompanying drawings, in which:
FIGS. 1 to 6 are schematic flowcharts each illustrating a voice interaction method according to embodiments of the present disclosure;
FIG. 7 is a flowchart illustrating a convolutional neural network model of a voice interaction method according to an embodiment of the present disclosure;
FIG. 8 is another flowchart illustrating the voice interaction method according to an embodiment of the present disclosure;
FIG. 9 is a classification diagram illustrating an NLU model compatible with both positive and negative examples of a voice interaction method according to an embodiment of the present disclosure;
FIG. 10 is another flowchart illustrating a voice interaction method according to an embodiment of the present disclosure;
FIG. 11 is yet another flowchart illustrating a voice interaction method according to an embodiment of the present disclosure;
FIG. 12 is a schematic diagram of modules illustrating a server according to an embodiment of the present disclosure; and
FIG. 13 is a scenario diagram of a voice interaction system according to an embodiment of the present disclosure.

### DESCRIPTION OF EMBODIMENTS

The embodiments of the present disclosure are described in detail below with reference to examples thereof as illustrated in the accompanying drawings, throughout which same or similar elements, or elements having same or similar functions, are denoted by same or similar reference numerals. The embodiments described below with reference to the accompanying drawings are illustrative only, and are intended to explain, rather than limiting, the present disclosure.

In the description of the embodiments of the present disclosure, the terms "first" and "second" are only used for descriptive purposes, but cannot be understood as indicating or implying relative importance or implicitly indicating the number of indicated technical features. Therefore, the features defined with "first" and "second" may explicitly or implicitly include one or more of the features. In the description of the embodiments of the present disclosure, "a plurality of/multiple" means two or more, unless specified otherwise.

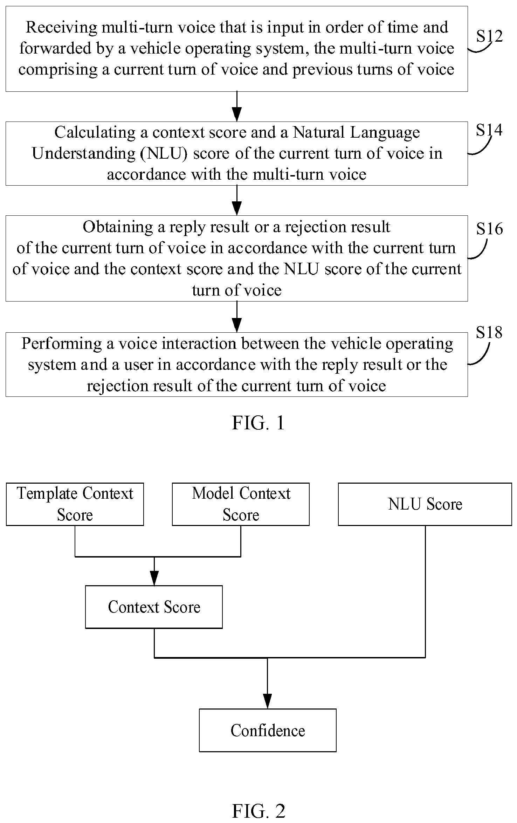

With reference to FIGS. 1 to 3, the voice interaction method according to embodiments of the present disclosure is applied in a server, and the voice interaction method includes:
S12: receiving multi-turn voice that is input in order of time and forwarded by a vehicle operating system, the multi-turn voice including a current turn of voice (query) and previous turns of voice;
S14: calculating a context score and an NLU score of the current turn of voice in accordance with the multi-turn voice;
S16: obtaining a reply result or a rejection result of the current turn of voice in accordance with the current turn of voice and the context score and the NLU score of the current turn of voice; and
S 18: performing a voice interaction between the vehicle operating system and a user in accordance with the reply result or the rejection result of the current turn of voice.

In the above voice interaction method, the context score and the NLU score of the current turn of voice are obtained by receiving multi-turn voice that is input in order of time and forwarded by the vehicle operating system; then the reply result or the rejection result of the current turn of voice is obtained; and the voice interaction between the vehicle operating system and the user is performed according to the reply result or the rejection result of the current turn of voice. As such, the vehicle operating system may be controlled to process the user's voice in an appropriate processing way, thereby reducing problems such as over-rejection and improving the user experience.

According to the semantic rejection and release technology based on a single-turn instruction in the related art, the vehicle operating system capable of continuously listening without wakeup may form a fusion model according to processing results of NLU models, such as a semantic rejection classification model, a named entity recognition model, a template matching model, and judges the received single instruction. This semantic rejection and release technology has a limited range of responding to the user's expression, the voice scenario cannot be expanded, and a non-defined voice scenario will basically be rejected, so that the user experience is affected. For example, when a non-defined voice scenario "I want to watch a movie" is received, a direct rejection will lead to a worse user experience; if it is released, "This function cannot be supported" will be replied since this voice scenario has not been defined yet, which will also lead to a worse user experience. At the same time, this semantic rejection and release technology has a problem that the language expressions supported by voice scenarios within definition are limited, and would basically be rejected when the language expressions are generalized. For example, in a process of multi-person dialogue, although a voice scenario within definition "I'm hungry" is received, it is generally preferred to be refused to reply in order to reduce an impact of a chat between a driver and a front passenger, since it is impossible to determine whether the user is communicating with a person or with the vehicle operating system, which causes that the user loses an experience of obtaining restaurant recommendations.

In addition, according to a context inheritance technology in the related art, the vehicle operating system capable of continuously listening without wakeup may determine a domain intent of the current turn by jumping to or inheriting a domain-intent-slot, according to the domain intents of the user that have appeared in the previous turns of voice. This context inheritance technology constructs a same voice scenario according to the historically reproduced domain intents, and has problems that a cross-scenario domain intent inheritance is rather blunt, not smooth enough, and logic is easy to be confused, etc. For example, referring to Table 1, Table 1 is a contextual mapping table that tracks back 3 turns. During an actual chatting process of the user, the vehicle operating system receives the current turn of voice (query) "Sunny Day". Since "I want to listen to a song" appeared in a first turn of voice, it is likely to inherit the domain-intent-slot of the first turn of voice, and then play the song "Sunny Day". To a certain extent, it interferes with the user's chat, resulting in a poor user experience.

**Table 1**

| Turns | Query | Domain | Intent | Slot | TTS |
|---|---|---|---|---|---|
| Turn 1 | I want to listen to a song. | music | music_play | -- | Play a nice song for you |
| Turn 2 | Good weather! How many degrees? | info | weather_search | city: Beijing, date: 0512 | Beijing is sunny today |
| Turn 3 | Yes | chat | chat confirm | -- | -- |
| Current Turn | Sunny Day | music | music_play | song: Sunny Day | Play Jay Chou's Sunny Day for you |

In other words, in the related art, the vehicle operating system capable of continuously listening without wakeup cannot accurately reply or reject the current turn of voice based on the context and information, and may reply to abnormal instructions or over-reject normal instructions, which cannot bring a good experience to the user.

The voice interaction method of this embodiment scores the current turn of voice according to the context, and then determines the reply result or the rejection result of the current turn of voice according to the score, which may effectively avoid the occurrence of over-rejection of the normal instructions, and improve the user experience.

Specifically, in step S12, the received multi-turn voice is stored in the context mapping table. The context mapping table includes at least turn information, voice (query) information, domain information, and intent information. That is, the context mapping table includes turn information, domain information, and intent information corresponding to the current turn of voice and the previous turns of voice. Among them, the current turn of voice corresponds to at least one set of domain information and intent information, and each previous turn of voice only corresponds to one set of domain information and intent information. In step S 14, the context score is calculated from a template context score and a model context score. In step S16, a semantic intent score (confidence) is calculated according to the context score and the NLU score of the current turn of voice; the reply result or the rejection result of the current turn of voice is obtained according to the current turn of voice and the confidence. In step S 18, the vehicle operating system is controlled, in accordance with the reply result or the rejection result of the current turn of voice, to directly reply, reject or continuously query the user to perform the voice interaction between the vehicle operating system and the user.

In an example, the multi-turn voice includes: the first turn of "Listen to a song"; the second turn of "A good mood hahaha"; the third turn of "Open the navigation"; and the current turn "I'm hungry". In the related art, the vehicle operating system rejects to recognize the current turn of voice, since it cannot determine whether the user is communicating with a person or with the vehicle operating system in the current turn; while in the voice interaction method of this embodiment, the vehicle operating system may directly reply with "Find nearby restaurants for you", since it may determine, by analyzing the context, that the user is communicating with the vehicle operating system in the current turn.

In another example, the multi-turn voice includes: the first turn of "Open the navigation"; the second turn of "How is the weather today"; the third turn of "I haven't eaten yet, are you hungry"; and the current turn of "I am hungry". In the related art, the vehicle operating system rejects to recognize the current turn of voice, since it cannot determine whether the user is communicating with a person or with the vehicle operating system in the current turn; and in the voice interaction method of this embodiment, the vehicle operating system rejects to recognize the current turn of voice, since it determines, by analyzing the context, that the user is communicating with a person in the current turn, and no response from the vehicle operating system is required.

In yet another example, the multi-turn voice includes: the first turn of "Haha"; the second turn of "What's the weather today"; the third turn of "Want to listen to a song"; and the current turn "How about Sunny Day". In the related art, the vehicle operating system rejects to recognize the current turn of voice, since it determines that the current turn of voice is noise; while in the voice interaction method of this embodiment, the vehicle operating system replies with "Do you want to listen to Jay Chou's Sunny Day", since it determines, by analyzing the context, that the user is communicating with the vehicle operating system in the current turn, and that the user may want to listen to a song or query about the weather, so it continuously queries the user for confirmation.

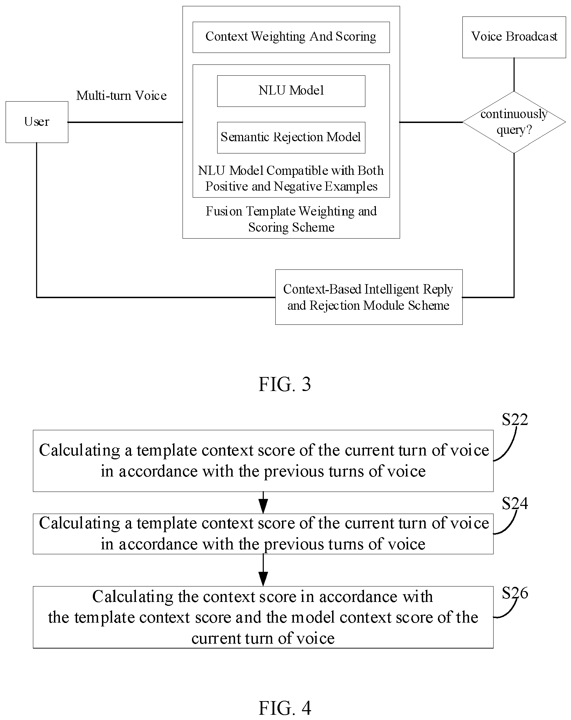

Referring to FIG. 4, in some embodiments, step S14 includes:
step S22 of calculating a template context score of the current turn of voice in accordance with the previous turn(s) of voice;
step S24 of calculating a model context score of the current turn of voice in accordance with the multi-turn voice; and
step S26 of calculating the context score in accordance with the template context score and the model context score of the current turn of voice.

In this way, an accurate context score may be obtained by fusing the template context score and the model context score. Specifically, the template context score of the current turn of voice is calculated in accordance with the previous turns of voice, and the model context score of the current turn of voice is calculated in accordance with the previous turns of voice and the current turn of voice. According to certain rules, the context score of the current turn of voice may be calculated by fusing the template context score and the model context score of the current turn of voice.

In some embodiments, the context score is calculated according to: A=α^{∗}B+(1-α)^{∗}C, where A represents the context score, B represents the model context score, C represents the template context score, and α represents a predetermined weight.

In this way, a more accurate context score may be obtained by weighting and fusing the template context score and the model context score. Specifically, a predetermined weight may be calculated according to: α=(n-1)/n, where n ∈ [2,+∞), and n is a total number of the previous turns of voice. The predetermined weight is related to the total number of the previous turns of voice. The more the total number of the previous turns of voice is, the greater the model's advantage is, and the stronger the model's ability is; and the less the total number of the previous turns of voice is, the greater the template's advantage is, and the stronger the template's ability is.

In an example, in the context mapping table including the previous 3 turns, the template context score is {"music-music_play": 0.5, "chat-chat_confirm": 0.333, "info-weather_search":0.167}, and the model context score is {"music-music_play": 0.7, "chat-chat_confirm": 0.2, "info-weather_search": 0.1}. Since the total number of the previous turns of voice is 3, i.e., n=3, the predetermined weight α=(3-1)/3≈0.67. Thus, according to the above formula, the score of "music-music_play" may be calculated as 0.67*0.5+0.33*0.7=0.634, the score of "chat-chat_confirm" may be calculated as 0.67*0.333+0.33*0.2=0.24389, and the score of "Info-weather_search" may be calculated as 0.67*0.167+0.33*0.1=0.12211. As such, the context score is {"music-music_play": 0.634, "chat-chat_confirm": 0.24389, "info-weather_search": 0.12211}.

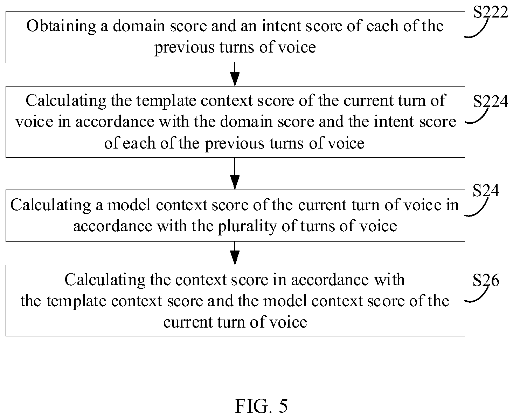

Referring to FIG. 5, in some embodiments, step S22 includes:
step S222 of obtaining a domain score and an intent score of each of the previous turns of voice; and
step S224 of calculating the template context score of the current turn of voice in accordance with the domain score and the intent score of each of the previous turns of voice.

In this way, the template context score of the current turn of voice is obtained.

Specifically, in step S222, the domain score and the intent score of each of the previous turns of voice are calculated by a turn weight D of each of the previous turns of voice, and are recorded in the context mapping table. The context mapping table includes turn information. The turn weight Dᵢ of the i-th turn of voice may be calculated according to: Dᵢ=i/(1+...+n)=2i/[(n+1)^{∗}n], where i ∈ [1,n], and n represents the total number of the previous turns of voice. Then, the domain score of the i-th turn of voice = 1*Di, and the intent score of the i-th turn of voice = 1^{∗}Dᵢ.

In step S224, the domain scores of the same domain in different previous turns of voice are added to form a summary of the domain scores with reciprocity; and the intent scores of the same intent in different previous turns of voice are added to form a summary of the intent scores with reciprocity. The template context score of the current turn of voice may be calculated in accordance with the domain-intent mapping relationship, the summary of the domain scores, and the summary of the intent scores in the previous turns of voice. The template context score includes a plurality of domain-intent scores, and each domain-intent score is an arithmetic average of the corresponding domain score and the corresponding intent score.

In an example, in conjunction with Table 2 which is a context mapping table including the previous 4 turns, in which Turns 1-4 are all previous turns, i.e., the total number of the previous turns of voice is 4, the turn weight, the domain score, and the intent score of the previous turns of voice may be calculated sequentially. The calculation results are illustrated in Table 2.

**Table 2**

| Turn | Turn Weight | Query | Domain, Score | Intent, Score |
|---|---|---|---|---|
| Turn 1 | 0.1 | Good weather! How many degrees? | info, 0.1 | weather search, 0.1 |
| Turn 2 | 0.2 | I want to listen to a song. | music, 0.2 | music_play, 0.2 |
| Turn 3 | 0.3 | Yes | chat, 0.3 | chat confirm, 0.3 |
| Turn 4 | 0.4 | Change a song | music, 0.4 | music conrol next, 0.4 |
| Current Turn | -- | Sunny Day | -- | -- |

The summary of the domain scores is {"info": 0.1, "chat": 0.3, "music": 0.6}, and the summary of the intent scores is {"weather_search": 0.1, "chat_confirm": 0.3, "music_play": 0.2, "music_conrol_next": 0.4}. In conjunction with the domain-intent mapping relationship in Table 2, the score of "music-music_control_next" may be calculated as (0.6+0.4)/2=0.5, the score of "music-music_play" may be calculated as (0.6+0.2)/2=0.4, the score of "chat-chat_confirm" may be calculated as (0.3+0.3)/2=0.3, and the score of "info-weather_search" may be calculated as (0.1+0.1)/2=0. 1. Therefore, the template context score of the current turn of voice is {"music-music_control_next": 0.5, "music-music_play": 0.4, "chat-chat_confirm": 0.3, "info-weather_search": 0.1}.

In another example, in conjunction with Table 3 which is a context mapping table including the previous 3 turns, in which Turns 1-3 are all previous turns, i.e., the total number of the previous turns of voice is 3, the turn weights, the domain scores, and the intent scores of the previous turns of voice may be calculated sequentially. The calculation results are illustrated in Table 3.

**Table 3**

| Turn | Turn Weight | Query | Domain, Score | Intent, Score |
|---|---|---|---|---|
| Turn 1 | 0.167 | Good weather! How many degrees? | info, 0.167 | weather_search, 0.167 |
| Turn 2 | 0.333 | Yes | chat, 0.333 | chat confirm, 0.333 |
| Turn 3 | 0.5 | I want to listen to a song. | music, 0.5 | music_play, 0.5 |
| Current Turn | -- | Sunny Day | -- | -- |

The summary of the domain scores is {"info": 0.167, "chat": 0.333, "music": 0.5}, and the summary of the intent scores is {"weather_search": 0.167, "chat_confirm": 0.333, "music_play": 0.5}. In conjunction with the domain-intent mapping relationship in Table 3, the score of "music-music_play" may be calculated as (0.5+0.5)/2=0.5, the score of "chat-chat_confirm" may be calculated as (0.333+0.333)/2=0.333, the score of "info-"weather_search" may be calculated as (0.167+0.167)/2=0.167. Therefore, the template context score of the current turn of voice is {"music-music_play": 0.5, "chat-chat_confirm": 0.333, "info-weather_search":0.167}.

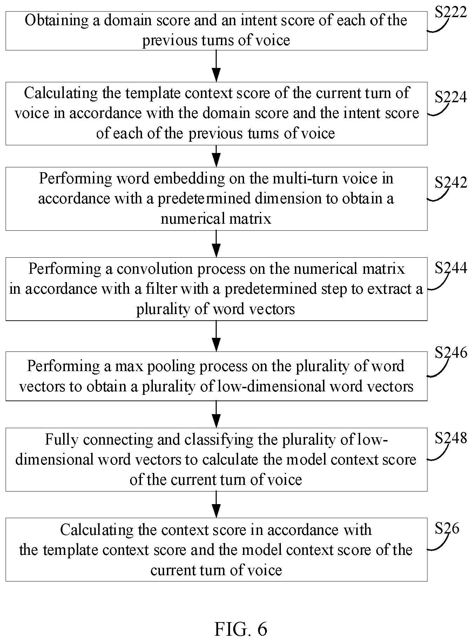

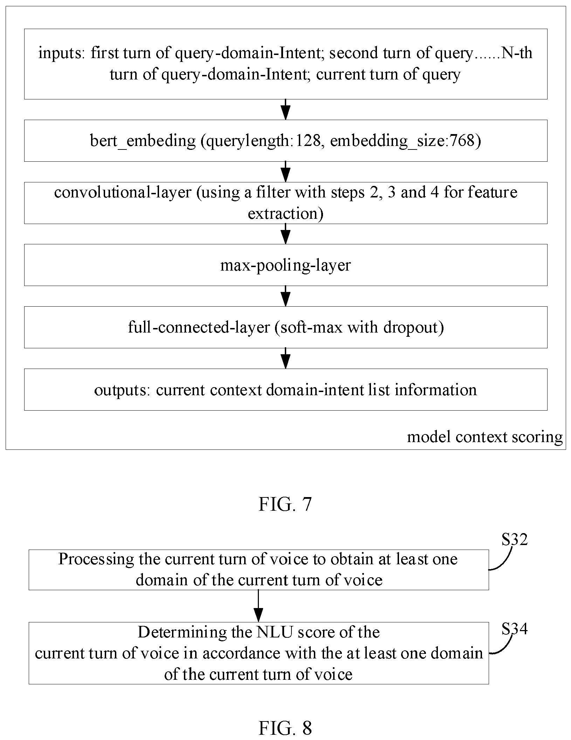

Referring to FIG. 6 and FIG. 7, in some embodiments, step S24 includes:
S242: performing word embedding on the multi-turn voice in accordance with a predetermined dimension to obtain a numerical matrix;
S244: performing a convolution process on the numerical matrix in accordance with a filter with a predetermined step to extract a plurality of word vectors;
S246: performing a max pooling process on the plurality of word vectors to obtain a plurality of low-dimensional word vectors; and
S248: fully connecting and classifying the plurality of low-dimensional word vectors to calculate the model context score of the current turn of voice.

In this way, the model context score may be calculated based on the convolutional neural network (Text-CNN) model. Specifically, in conjunction with FIG. 7, the convolutional neural network model includes an input layer (Bert_Embeding), a convolutional layer (Convolutional-Layer), a pooling layer (Max-Pooling-Layer) and a fully connected softmax layer (Full-Connected- Layer).

Step S242 occurs in the input layer. A predetermined dimension is (128*768). A feature representation includes a vector matrix. The word embedding is to vectorize each word in the multi-turn voice, that is, a word vector is used to uniquely represent a word, and all of the word vectors are formed into a vector matrix. The length of the word vector, i.e., the row size of the vector matrix, is 128, and the column size of the vector matrix is 768.

Step S244 occurs in the convolutional layer. The predetermined steps include 2, 3, and 4, and the filters with the steps of 2, 3, and 4 are used to respectively perform a convolution process on the vector matrix to extract a plurality of feature vectors.

Step S246 occurs in the pooling layer. Because the filters with different steps are used in the convolution process, the dimensions of the feature vectors obtained after passing through the convolution layer will be inconsistent. Therefore, in the pooling layer, the dimension of each feature vector is reduced and pooled to be one value, i.e., the maximum value of each feature vector is extracted to represent the feature, and the maximum value is considered to represent the most important feature. In this way, the plurality of feature vectors of different dimensions are transformed into the feature vectors of a same dimension.

Step S248 occurs in the fully connected softmax layer. All of the feature vectors of the same dimension are spliced into a final feature vector; the final feature vector is classified in domain-intent context, and the soft-max function is applied to output the probability of each class of domain-intent context, thereby obtaining the model context score of the current turn of voice.

In one example, the multi-turn voice includes: "Good weather! How many degrees?"-info-weather search; "yes"-chat-chat_confirm; "I want to listen to a song"-music-music_play; and "Sunny Day". After processing by the input layer, the convolutional layer, the pooling layer, and the fully connected softmax layer, the model context score of the current turn of voice is obtained as {"music-music_play": 0.7, "chat-chat_confirm": 0.2, "info-weather_search" :0.1}.

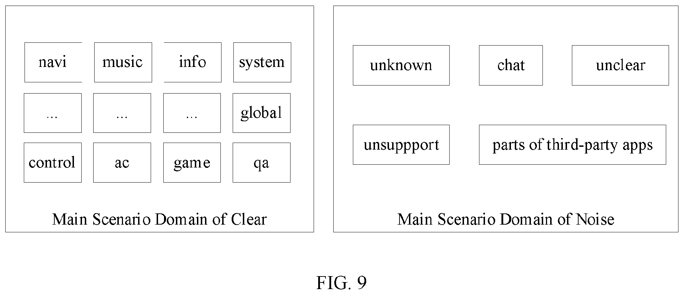

Referring to FIG. 8 and FIG. 9, in some embodiments, step S14 includes:
S32: processing the current turn of voice to obtain at least one domain of the current turn of voice; and
S34: determining the NLU score of the current turn of voice in accordance with the at least one domain of the current turn of voice.

In this way, in conjunction with FIG. 9, the NLU score of the current turn of voice may be calculated based on an NLU model compatible with both positive and negative examples. Specifically, the NLU model compatible with both positive and negative examples includes Clear and Noise. In one embodiment, a Clear scenario domain includes at least a navigation (navi) domain, a music domain, an information (info) domain, a system domain, a global domain, a control domain, an academic (ac) domain, a game domain, and a question and answer (qa) domain. The Noise scenario domain includes at least an unknown domain, a chat domain, an unclear domain, an unsupported domain, and parts of third-party application domain. Step S32 includes processing the current turn of voice to obtain at least one domain of the current turn of voice in Clear, and processing the current turn of voice to obtain at least one domain of the current turn of voice in Noise. Step S34 includes determining a Clear score and a Noise score in accordance with at least one domain of the current turn of voice in Clear and at least one domain of the current turn of voice in Noise. The sum of the Clear score and the Noise score is 1. It may be understood that the Clear score indicates a probability that the domain corresponding to the current turn of voice belongs to Clear, and the Noise score indicates a probability that the domain corresponding to the current turn of voice belongs to Noise. The higher the Clear score is, the lower the Noise score is, and the lower the Clear score is, the higher the Noise score is.

In an example, the current turn of voice is "Let's go have a barbecue". In Clear, the current turn of voice may be the navigation domain, and in Noise, the current turn of voice may be the chat domain. The NLU model compatible with both positive and negative examples determines that the probability of the current turn of voice belonging to the navigation domain is 0.15, and the probability of the current turn of voice belonging to the chatting domain is 0.85, i.e., the Clear score is 0.15, and the Noise score is 0.85. Therefore, the NLU score of the current turn of voice is {"clear": 0.15, "noise":0.85}.

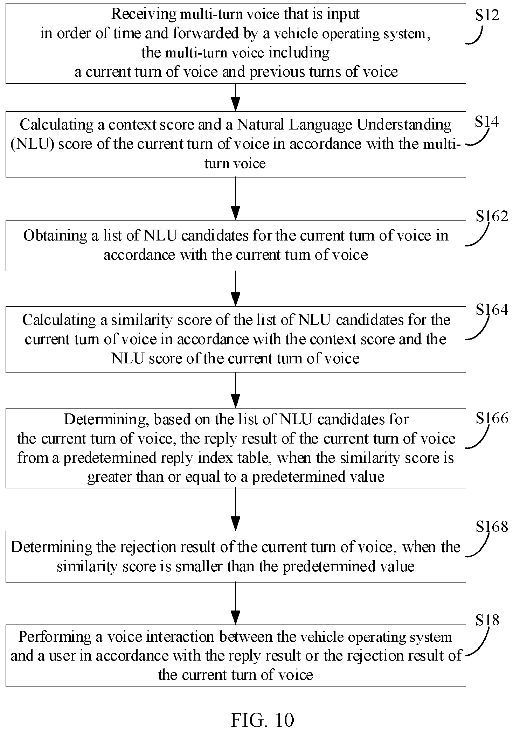

Referring to FIG. 10, in some embodiments, step S16 includes:
step S162 of obtaining a list of NLU candidates for the current turn of voice in accordance with the current turn of voice;
step S164 of calculating a similarity score of the list of NLU candidates for the current turn of voice in accordance with the context score and the NLU score of the current turn of voice;
step S166 of determining, based on the list of NLU candidates for the current turn of voice, the reply result of the current turn of voice from a predetermined reply index table, when the similarity score is greater than or equal to a predetermined value;
step S168 of determining the rejection result of the current turn of voice, when the similarity score is smaller than the predetermined value.

In this way, the current turn of voice may be processed in an appropriate way according to the relationship between the similarity score and the predetermined value, reducing the problems such as over-rejection, and improving the user experience. Specifically, in step S162, a list of NLU candidates for the current turn of voice may include voice information, domain information, and intent information, and the current turn of voice corresponds to at least one set of domain information and intent information.

Step S164 includes: step 1 of fusing the context score and the NLU score of the current turn of voice to obtain the confidence; and step 2 of calculating the similarity score of the list of NLU candidates for the current turn of voice in accordance with the confidence.

Further, in step 1, the Clear score in the NLU scores is proportionally divided into the scores of the context scores corresponding to the plurality of domains that belong to Clear, in order to obtain the confidences of the plurality of corresponding domains belonging to Clear; after the scores of the context scores corresponding to the plurality of domains belonging to Noise are summed up, the sum of the scores is multiplied with the Noise score in the NLU score, in order to obtain a confidence of Noise. In an example, the context score is {"music-music_play": 0.5, "chat-chat_confirm": 0.333, "info-weather_search": 0.167}, and the NLU score is {"clear": 0.15, "noise": 0.85}. Thus, the score of "music-music_play" in Clear may be calculated as: 0.15*(0.5/(0.5+0.167))+0.5=0.6125, the score of "info-weather_search" in Clear may be calculated as: 0.15*(0.167/(0.5+0.167)) + 0.167= 0.174, and the score of "noise" in Noise may be calculated as: 0.333*0.85=0.285. Therefore, the confidence is {"music-music_play": 0.6125, "noise": 0.285, "info-weather_search": 0.174}. In another example, the context score is {"music-music_play": 0.7, "info-weather_search": 0.3}, and the NLU score is {"clear": 0.15, "noise": 0.85}. Thus, the score of "Music-music_play" in Clear may be calculated as: 0.15 *(0.7/(0.7+0.3))+0.7=0.805, the score of "info-weather_search" in Clear may be calculated as: 0.15*(0.3/(0.7+0.3))+0.3= 0.345, and the score of "noise" in Noise may be calculated as: 0*0.85=0. Therefore, the confidence is {"music-music_play": 0.805, "info-weather_search": 0.345, "noise": 0}. In yet another example, the context score is {"chat-chat_a": 0.5, "chat-chat_b": 0.4, "chat-chat_c": 0.1}, and the NLU score is {"clear": 0.15, "noise": 0.85}. Thus, the score of "noise" in Noise may be calculated as: (0.5+0.4+0.1)*0.85=0.85. Therefore, the confidence is {"noise": 0.85}.

In step 2, the similarity score of the list of NLU candidates for the current turn of voice is: Score = Edit Distance Similarity * Confidence, where the Edit Distance Similarity is a similarity between a domain-intent string of the current turn of voice calculated based on an edit distance and the domain-intent string of the similar context in the confidence.

Further, in an example, the predetermined value is 0.3. When the similarity score is greater than or equal to 0.3, the reply result (tts) of the current turn of voice is determined from the predetermined reply index table, in accordance with the list of NLU candidates for the current turn of voice; when the similarity score is smaller than 0.3, the rejection result of the current turn of voice is determined.

In an example, the multi-turn voice includes: the first turn of "Listen to a song"; the second turn of "A good mood hahaha"; the third turn of "Open the navigation"; and the current turn "I'm hungry". Referring to Table 4 to Table 8, Table 4 is a semantic intent table, Table 5 is a list of NLU candidates for the current turn of voice, Table 6 is a similarity table of the list of NLU candidates for the current turn of voice, Table 7 is a predetermined reply index table, and Table 8 is a candidate reply table for the current turn of voice. According to Table 5, the domain-intent string of the current turn of voice is "navi-navi_search_food", and the domain-intent string in Table 4 with the similar context is "navi-navi_search", and the corresponding confidence in Table 4 is 0.6. Therefore, a similarity score of the list of NLU candidates for the current turn of voice = Calculated Edit Distance Similarity * 0.6 = 0.5, as illustrated in Table 6. Since the similarity score is greater than or equal to 0.3, it is determined from Table 7 that the reply result of the current turn of voice is "Find nearby restaurants for you", so as to form Table 8.

**Table 4**

| Domain | Intent | Confidence |
|---|---|---|
| Noise | Noise | 0.2 |
| navi | navi search | 0.6 |
| music | music play | 0.1 |
| -- | -- | -- |

**Table 5**

| Voice | Domain | Intent |
|---|---|---|
| I am hungry | navi | navi search food |

**Table 6**

| Domain | Intent | Score |
|---|---|---|
| navi | navi search food | 0.5 |

**Table 7**

| Domain | Intent | Tts |
|---|---|---|
| music | music_play | Play a theme song of xx movie for you |
| music | music control next | Play the next song for you |
| music | music _control_pre | Play the previous song for you |
| info | weather_search | xx is Sunny, 25°C |
| info | news search | Broadcast news |
| info | film_search | Introduce xx movie for you |
| navi | navi_search | Find nearby restaurants for you |
| navi | navi_location | We are currently in Zhongguancun |

**Table 8**

| domain | intent | tts |
|---|---|---|
| navi | navi_search | Find nearby restaurants for you |

In another example, the multi-turn voice includes: the first turn of "Open the navigation"; the second turn of "How is the weather today"; the third turn of "I haven't eaten yet, are you hungry"; and the current turn of "I am hungry". Referring to Table 9 to Table 11, Table 9 is a semantic intent table, Table 10 is a list of NLU candidates for the current turn of voice, and Table 11 is a similarity table of the list of NLU candidates for the current turn of voice. According to Table 10, the domain-intent string of the current turn of voice is "navi-navi_search_food". The domain-intent string in Table 9 with the similar context is "navi-navi_search", and the corresponding confidence in Table 9 is 0.1. Therefore, a similarity score of the list of NLU candidates for the current turn of voice = Calculated Edit Distance Similarity * 0.1 = 0.09, as illustrated in Table 11. Since the similarity score is smaller than 0.3, it is determined that the current turn of voice is rejected.

**Table 9**

| Domain | Intent | Confidence |
|---|---|---|
| noise | noise | 0.6 |
| info | weather search | 0.2 |
| navi | navi search | 0.1 |
| -- | -- | -- |

**Table 10**

| Query | Domain | Intent |
|---|---|---|
| I am hungry | navi | navi_search_food |

**Table 11**

| Domain | Intent | Score |
|---|---|---|
| navi | navi_search_food | 0.09 |

In yet another example, the multi-turn voice includes: the first turn of "Haha"; the second turn of "What's the weather today"; the third turn of "Want to listen to a song"; and the current turn "How about Sunny Day". Referring to Table 12 to Table 16, Table 12 is a semantic intent table, Table 13 is a list of NLU candidates for the current turn of voice, Table 14 is a similarity score table of the current turn of voice, and Table 15 is a predetermined reply index table, Table 16 is a candidate reply table of the current turn of voice. According to Table 13, the domain-intent string of the current turn of voice includes "music-music_play" and "info-weather_search". The domain-intent string in Table 12 with the similar context is "music-music_play" and "info-weather_search", and the corresponding confidences in Table 12 are 0.4 and 0.3 respectively. The similarity scores of the list of NLU candidates for the current turn of voice may be calculated to be 0.4 and 0.3 respectively, as illustrated in Table 14. Since the two similarity scores of the current turn of voice are both greater than or equal to 0.3, it may be determined from Table 15 that the reply results of the current turn of voice include "Do you want to play xx of xx" and "Do you want to check the weather of xx", so as to form Table 16.

**Table 12**

| Domain | Intent | Confidence |
|---|---|---|
| noise | noise | 0.2 |
| music | music_play | 0.4 |
| info | weather_search | 0.3 |
| -- | -- | -- |

**Table 13**

| Query | Domain | Intent |
|---|---|---|
| How about Sunny Day | music | music_play |
| How about Sunny Day | info | weather_search |

**Table 14**

| Domain | Intent | Score |
|---|---|---|
| music | music_play | 0.4 |
| info | weather_search | 0.3 |

**Table 15**

| Domain | Intent | TTS |
|---|---|---|
| music | music_play | Do you want to play xx of xx |
| music | music_control_next | Do you want to play the next song |
| music | music _control_pre | Do you want to play the previous song |
| info | weather_search | Do you want to check the weather of xx |
| info | news_search | Do you want to check news about xx |
| info | film_search | Do you want to check the movie xx |
| navi | navi_search | Do you want to navigate to xx |
| navi | navi_location | Do you want to check the current location |

**Table 16**

| Domain | Intent | TTS |
|---|---|---|
| music | music_play | Do you want to play xx of xx |
| info | weather_search | Do you want to check the weather of xx |

When entering the next turn of voice "Navigation does not work very well", Table 17 and Table 18 may be referred to, wherein Table 17 is a list of NLU candidates for the next turn of voice, and Table 18 is a similarity score table of a list of NLU candidates for the next turn of voice. The similarity scores of the list of NLU candidates for the next turn of voice may be calculated to be 0.2 and 0.2, respectively. Since the two similarity scores of the next turn of voice are both smaller than 0.3, it is determined that the next turn of voice is rejected.

**Table 17**

| Query | Domain | Intent |
|---|---|---|
| Navigation does not work very well | navi | navi_search |

**Table 18**

| Domain | Intent | Score |
|---|---|---|
| navi | navi_search | 0.2 |
| info | weather_search | 0.2 |

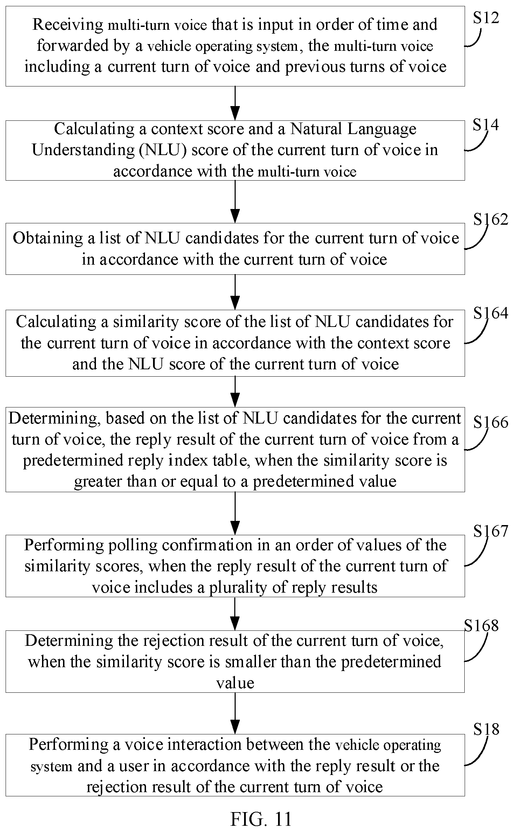

Referring to FIG. 11, in some embodiments, the voice interaction method includes:
Step S167 of performing polling confirmation in an order of values of the similarity scores, when the reply result of the current turn of voice includes a plurality of reply results.

In this way, the user instructions may be executed more reliably by continuous queries, thereby improving the user experience. Specifically, in some embodiments, the polling confirmation is performed in an order of values of the similarity scores, which includes: replying with a reply result corresponding to the highest similarity score first; executing a corresponding instruction in response to obtaining a positive voice; replying with a reply result corresponding to the second highest similarity score in response to obtaining a negative voice. In this way, more reply levels may be provided and thus the user experience may be improved.

In an example, referring to Table 14 and Table 16, Table 14 is a similarity score table of the current turn of voice, and Table 16 is a candidate reply table of the current turn of voice. The reply result corresponding to the similarity score of 0.4 is "Do you want to play xx of xx", the reply result corresponding to the similarity score of 0.3 is "Do you want to check the weather of xx". According to the numerical order of the similarity scores, "Do you want to play xx of xx" is replied first. In response to obtaining the positive voice, the corresponding instruction is executed. In response to obtaining the negative voice, "Do you want to check the weather of xx" is replied. If the positive voice is obtained, the corresponding instruction is executed; if the negative voice is obtained, the next turn of voice is waited for.

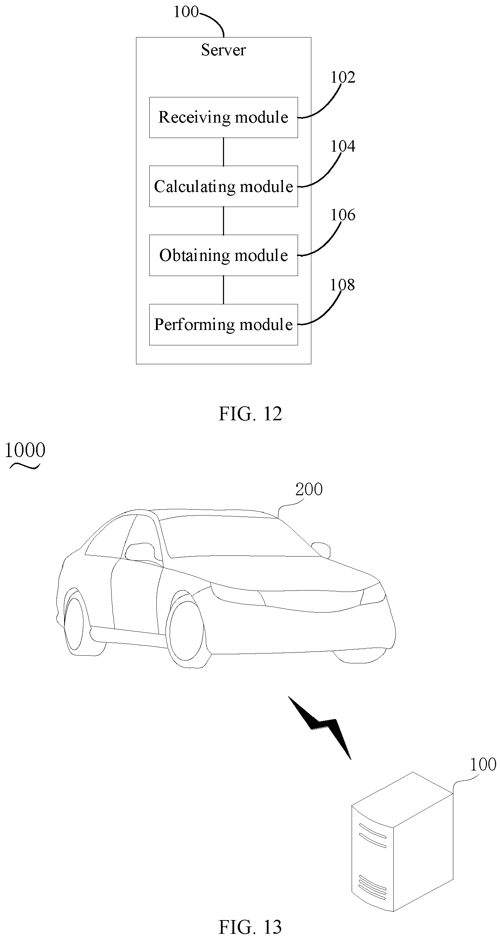

Referring to FIG. 12, the server 100 according to the embodiment of the present disclosure includes a receiving module 102, a calculating module 104, an obtaining module 106, and a performing module 108. The receiving module 102 is configured to receive multi-turn voice that is input in order of time and forwarded by a vehicle operating system, the multi-turn voice including a current turn of voice and previous turns of voice. The calculating module 104 is configured to calculate a context score and an NLU score of the current turn of voice in accordance with the multi-turn voice. The obtaining module 106 is configured to obtain a reply result or a rejection result of the current turn of voice in accordance with the current turn of voice, and the context score and the NLU score of the current turn of voice. The performing module 108 is configured to perform a voice interaction between the vehicle operating system and a user, in accordance with the reply result or the rejection result of the current turn of voice.

In the above server 100, the context score and the NLU score of the current turn of voice are obtained by receiving multi-turn voice that is input in order of time and forwarded by the vehicle operating system; then the reply result or the rejection result of the current turn of voice is obtained; and the voice interaction between the vehicle operating system and the user is performed in accordance with the reply result or the rejection result of the current turn of voice. As such, the vehicle operating system may be controlled to process the user's voice in an appropriate processing way, thereby reducing problems such as over-rejection and improving the user experience.

It should be noted that the above explanations on the implementation and beneficial effects of the voice interaction method are also applicable to the server 100 of the embodiment, the description of which is omitted here in order to avoid redundancy.

Referring to FIG. 13, the voice interaction system 1000 according to the embodiment of the present disclosure includes a vehicle 200 and the server 100 as previously described.

In the above voice interaction system 1000, the context score and the NLU score of the current turn of voice are obtained by receiving multi-turn voice that is input in order of time and forwarded by the vehicle operating system; then the reply result or the rejection result of the current turn of voice is obtained; and the voice interaction between the vehicle operating system and the user is performed according to the reply result or the rejection result of the current turn of voice. As such, the vehicle operating system may be controlled to process the user's voice in an appropriate processing way, thereby reducing problems such as over-rejection and improving the user experience.

Specifically, the vehicle 200 may be connected to the server 100 wirelessly, such as via WIFI, a mobile communication network, etc. The vehicle 200 includes, but is not limited to, a pure electric vehicle, a hybrid electric vehicle, an extended-range electric vehicle, a fuel vehicle, and the like.

In the description of this specification, descriptions with reference to the terms "one embodiment", "some embodiments", "an example", "a specific example", or "some examples" etc. mean that specific features, structures, materials, or features described in conjunction with the embodiment or example are included in at least one embodiment or example of the present disclosure. In this specification, the illustrative expressions of the above terms do not necessarily refer to the same embodiment or example of the present disclosure. Moreover, the described specific features, structures, materials or features may be combined in any one or more embodiments or examples in a suitable manner. In addition, the different embodiments or examples and the features of the different embodiments or examples described in this specification may be combined and integrated by the skilled in the art without contradicting with each other.

In addition, the terms such as "first" and "second" are only used herein for purposes of description, and are not intended to indicate or imply relative importance or implicitly indicate the number of indicated technical features. Therefore, the features defined with "first" and "second" may explicitly or implicitly include one or more this feature. In the description of the present disclosure, "plurality of/multiple" means at least two, such as two, or three, etc., unless specified otherwise.

Any process or method described in a flowchart or described in other ways herein may be understood to include one or more modules, segments or parts of codes of executable instructions for implementing specific logical functions or steps in the process. And, the scope of a preferred embodiment of the present disclosure includes additional implementations, which may not be in the order as illustrated or discussed, including performing functions in a substantially simultaneous manner or in the reverse order according to the functions involved, which should be understood by the skilled in the art.

Although embodiments of the present disclosure have been illustrated and described above, it should be understood that the above-mentioned embodiments are exemplary and cannot be construed to limit the present disclosure. Changes, modifications, substitutions, and modifications may be performed by the skilled in the art on the above-mentioned embodiments within the scope of the present disclosure, as defined by the appended claims.

## Claims

1. A voice interaction method, applied in a server, the voice interaction method comprising:
receiving (S12) multi-turn voice that is input in order of time and forwarded by a vehicle operating system, the multi-turn voice comprising a current turn of voice and one or more previous turns of voice;
calculating (S14) a context score and a Natural Language Understanding, NLU, score of the current turn of voice in accordance with the multi-turn voice;
obtaining (S16) a reply result or a rejection result of the current turn of voice in accordance with the current turn of voice and the context score and the NLU score of the current turn of voice; and
performing (S18) a voice interaction between the vehicle operating system and a user in accordance with the reply result or the rejection result of the current turn of voice,
wherein said calculating (S14) the context score of the current turn of voice in accordance with the multi-turn voice comprises:
calculating (S22) a template context score of the current turn of voice in accordance with the one or more previous turns of voice;
calculating (S24) a model context score of the current turn of voice in accordance with the multi-turn voice; and
calculating (S26) the context score in accordance with the template context score and the model context score of the current turn of voice;
**characterized in that**
said calculating (S22) the template context score of the current turn of voice in accordance with the one or more previous turns of voice comprises:
obtaining (S222) a domain score and an intent score of each of the one or more previous turns of voice; and
calculating (S224) the template context score of the current turn of voice in accordance with the domain score and the intent score of each of the one or more previous turns of voice, and
said calculating (S24) the model context score of the current turn of voice in accordance with the multi-turn voice comprises:
performing (S242) word embedding on the multi-turn voice in accordance with a predetermined dimension to obtain a numerical matrix;
performing (S244) a convolution process on the numerical matrix in accordance with a filter with a predetermined step to extract a plurality of word vectors;
performing (S246) a max pooling process on the plurality of word vectors to obtain a plurality of low-dimensional word vectors; and
fully connecting and classifying (S248) the plurality of low-dimensional word vectors to calculate the model context score of the current turn of voice.

2. The voice interaction method according to claim 1, wherein the context score is calculated according to: A=α*B+(1-α)*C, where A represents the context score, B represents the model context score, C represents the template context score, and α represents a predetermined weight.

3. The voice interaction method according to claim 1, wherein said calculating (S14) the NLU score of the current turn of voice in accordance with the multi-turn voice comprises:
processing (S32) the current turn of voice to obtain at least one domain of the current turn of voice; and
determining (S34) the NLU score of the current turn of voice in accordance with the at least one domain of the current turn of voice.

4. The voice interaction method according to claim 1, wherein said obtaining (S16) the reply result or the rejection result of the current turn of voice in accordance with the current turn of voice and the context score and the NLU score of the current turn of voice comprises:
obtaining (S162) a list of NLU candidates for the current turn of voice in accordance with the current turn of voice;
calculating (S164) a similarity score of the list of NLU candidates for the current turn of voice in accordance with the context score and the NLU score of the current turn of voice;
determining (S166), based on the list of NLU candidates for the current turn of voice, the reply result of the current turn of voice from a predetermined reply index table, when the similarity score is greater than or equal to a predetermined value; and
determining (S168) the rejection result of the current turn of voice, when the similarity score is smaller than the predetermined value.

5. The voice interaction method according to claim 4, further comprising:
performing (S167) polling confirmation in an order of values of the similarity scores, when the reply result of the current turn of voice comprises a plurality of reply results.

6. The voice interaction method according to claim 5, wherein said performing (S167) the polling confirmation in the order of values of the similarity scores comprises:
replying with a reply result corresponding to a highest similarity score first;
executing a corresponding instruction in response to obtaining a positive voice;
replying with a reply result corresponding to a second highest similarity score in response to obtaining a negative voice.

7. A server (100), comprising:
a receiving module (102) configured to receive multi-turn voice that is input in order of time and forwarded by a vehicle operating system, the multi-turn voice comprising a current turn of voice a;
a calculating module (104) configured to calculate a context score and a Natural Language Understanding, NLU, score of the current turn of voice in accordance with the multi-turn voice;
an obtaining module (106) configured to obtain a reply result or a rejection result of the current turn of voice in accordance with the current turn of voice and the context score and the NLU score of the current turn of voice; and
a performing module (108) configured to perform a voice interaction between the vehicle operating system and a user in accordance with the reply result or the rejection result of the current turn of voice,
wherein said calculating the context score of the current turn of voice in accordance with the multi-turn voice comprises:
calculating a template context score of the current turn of voice in accordance with the one or more previous turns of voice;
calculating a model context score of the current turn of voice in accordance with the multi-turn voice; and
calculating the context score in accordance with the template context score and the model context score of the current turn of voice,
**characterized in that**, said calculating the template context score of the current turn of voice in accordance with the one or more previous turns of voice comprises:
obtaining a domain score and an intent score of each of the one or more previous turns of voice; and
calculating the template context score of the current turn of voice in accordance with the domain score and the intent score of each of the one or more previous turns of voice, and
said calculating the model context score of the current turn of voice in accordance with the multi-turn voice comprises:
performing word embedding on the multi-turn voice in accordance with a predetermined dimension to obtain a numerical matrix;
performing a convolution process on the numerical matrix in accordance with a filter with a predetermined step to extract a plurality of word vectors;
performing a max pooling process on the plurality of word vectors to obtain a plurality of low-dimensional word vectors; and
fully connecting and classifying the plurality of low-dimensional word vectors to calculate the model context score of the current turn of voice.

8. The server (100) according to claim 7, wherein the context score is calculated according to: A=α*B+(1-α)*C, where A represents the context score, B represents the model context score, C represents the template context score, and α represents a predetermined weight.

9. The server (100) according to claim 7, wherein said calculating the NLU score of the current turn of voice in accordance with the multi-turn voice comprises:
processing the current turn of voice to obtain at least one domain of the current turn of voice; and
determining the NLU score of the current turn of voice in accordance with the at least one domain of the current turn of voice.

10. The server (100) according to claim 7, wherein said obtaining the reply result or the rejection result of the current turn of voice in accordance with the current turn of voice and the context score and the NLU score of the current turn of voice comprises:
obtaining a list of NLU candidates for the current turn of voice in accordance with the current turn of voice;
calculating a similarity score of the list of NLU candidates for the current turn of voice in accordance with the context score and the NLU score of the current turn of voice;
determining, based on the list of NLU candidates for the current turn of voice, the reply result of the current turn of voice from a predetermined reply index table, when the similarity score is greater than or equal to a predetermined value; and
determining the rejection result of the current turn of voice, when the similarity score is smaller than the predetermined value.

11. The server (100) according to claim 10, further comprising:
a module configured to perform polling confirmation in an order of values of the similarity scores, when the reply result of the current turn of voice comprises a plurality of reply results.

12. The server (100) according to claim 11, wherein said performing the polling confirmation in the order of values of the similarity scores comprises:
replying with a reply result corresponding to a highest similarity score first;
executing a corresponding instruction in response to obtaining a positive voice; and
replying with a reply result corresponding to a second highest similarity score in response to obtaining a negative voice.

13. A voice interaction system (1000), comprising a vehicle (200) and the server (100) according to any one of claims 7 to 12.

## Patentansprüche

1. Sprachinteraktionsverfahren, das in einem Server angewendet wird, wobei das Sprachinteraktionsverfahren Folgendes beinhaltet:
Empfangen (S12) von Multiturn-Stimme, die in zeitlicher Reihenfolge eingegeben und von einem Fahrzeugbetriebssystem weitergeleitet wird, wobei die Multiturn-Stimme einen aktuellen Tum-of-Voice und einen oder mehrere vorherige Turns-of-Voice umfasst;
Berechnen (S14) einer Kontextbewertung und einer NLU-(Natural Language Understanding)-Bewertung des aktuellen Turn-of-Voice gemäß der Multiturn-Stimme;
Erhalten (S16) eines Antwortergebnisses oder eines Ablehnungsergebnisses des aktuellen Tum-of-Voice gemäß dem aktuellen Turn-of-Voice und der Kontextbewertung und der NLU-Bewertung des aktuellen Tum-of-Voice; und
Durchführen (S18) einer Sprachinteraktion zwischen dem Fahrzeugbetriebssystem und einem Benutzer gemäß dem Antwortergebnis oder dem Ablehnungsergebnis des aktuellen Turn-of-Voice,
wobei das genannte Berechnen (S14) der Kontextbewertung des aktuellen Turn-of-Voice gemäß der Multiturn-Stimme Folgendes beinhaltet:
Berechnen (S22} einer Schablonenkontextbewertung des aktuellen Turn-of-Voice gemäß den ein oder mehreren vorherigen Tums-of-Voice;
Berechnen (S24) einer Modellkontextbewertung des aktuellen Turn-of-Voice gemäß der Multiturn-Stimme; und
Berechnen (S26) der Kontextbewertung gemäß der Schablonenkontextbewertung und der Modellkontextbewertung des aktuellen Turn-of-Voice;
**dadurch gekennzeichnet, dass**
das genannte Berechnen (S22} der Schablonenkontextbewertung des aktuellen Turn-of-Voice gemäß den ein oder mehreren vorherigen Turns-of-Voice Folgendes beinhaltet:
Erhalten (S222) einer Domänenbewertung und einer Absichtsbewertung von jedem der ein oder mehreren vorherigen Turns-of-Voice; und
Berechnen (S224) der Schablonenkontextbewertung des aktuellen Turn-of-Voice gemäß der Domänenbewertung und der Absichtsbewertung von jedem der ein oder mehreren vorherigen Turns-of-Voice, und
wobei das genannte Berechnen (S24) der Modellkontextbewertung des aktuellen Turn-of-Voice gemäß der Multiturn-Stimme Folgendes beinhaltet:
Durchführen (S242) einer Worteinbettung an der Multiturn-Stimme gemäß einer vorbestimmten Dimension, um eine numerische Matrix zu erhalten;
Durchführen (S244) eines Faltungsprozesses an der numerischen Matrix gemäß einem Filter mit einem vorbestimmten Schritt zum Extrahieren einer Mehrzahl von Wortvektoren,
Durchführen (S246) eines Max-Pooling-Prozesses an der Mehrzahl von Wortvektoren, um eine Mehrzahl von niederdimensionalen Wortvektoren zu erhalten; und
vollständiges Verbinden und Klassifizieren (S248) der Mehrzahl von niederdimensionalen Wortvektoren, um die Modellkontextbewertung des aktuellen Turn-of-Voice zu berechnen.

2. Sprachinteraktionsverfahren nach Anspruch 1, wobei die Kontextbewertung gemäß A=α^{∗}B+(1-α)^{∗}C berechnet wird, wobei A die Kontextbewertung, B die Modellkontextbewertung, C die Schablonenkontextbewertung und α eine vorbestimmte Gewichtung repräsentiert.

3. Sprachinteraktionsverfahren nach Anspruch 1, wobei das genannte Berechnen (S14) der NLU-Bewertung des aktuellen Tum-of-Voice gemäß der Multiturn-Stimme Folgendes beinhaltet:
Verarbeiten (S32) des aktuellen Turn-of-Voice, um mindestens eine Domäne des aktuellen Tum-of-Voice zu erhalten; und
Bestimmen (S34) der NLU-Bewertung des aktuellen Tum-of-Voice gemäß der mindestens einen Domäne des aktuellen Turn-of-Voice.

4. Sprachinteraktionsverfahren nach Anspruch 1, wobei das genannte Erhalten (S16) des Antwortergebnisses oder des Ablehnungsergebnisses des aktuellen Turn-of-Voice gemäß dem aktuellen Turn-of-Voice und der Kontextbewertung und der NLU-Bewertung des aktuellen Tum-of-Voice Folgendes beinhaltet:
Erhalten (S162) einer Liste von NLU-Kandidaten für den aktuellen Tum-of-Voice gemäß dem aktuellen Turn-of-Voice;
Berechnen (S164) einer Ähnlichkeitsbewertung der Liste von NLU-Kandidaten für den aktuellen Turn-of-Voice gemäß der Kontextbewertung und der NLU-Bewertung des aktuellen Tum-of-Voice;
Bestimmen (S166), auf der Basis der Liste von NLU-Kandidaten für den aktuellen Turn-of-Voice, des Antwortergebnisses des aktuellen Tum-of-Voice aus einer vorbestimmten Antwortindextabelle, wenn die Ähnlichkeitsbewertung genauso groß wie oder größer als ein vorbestimmter Wert ist; und
Bestimmen (S168) des Ablehnungsergebnisses des aktuellen Turn-of-Voice, wenn die Ähnlichkeitsbewertung kleiner als der vorbestimmte Wert ist.

5. Sprachinteraktionsverfahren nach Anspruch 4, das ferner Folgendes beinhaltet:
Durchführen (S167) einer Abfragebestätigung in einer Reihenfolge von Werten der Ähnlichkeitsbewertungen, wenn das Antwortergebnis des aktuellen Turn-of-Voice eine Mehrzahl von Antwortergebnissen umfasst.

6. Sprachinteraktionsverfahren nach Anspruch 5, wobei das genannte Durchführen (S167) der Abfragebestätigung in der Reihenfolge von Werten der Ähnlichkeitsbewertungen Folgendes beinhaltet:
zuerst Antworten mit einem Antwortergebnis, das einer höchsten Ähnlichkeitsbewertung entspricht;
Ausführen einer entsprechenden Anweisung als Reaktion auf den Erhalt einer positiven Stimme;
Antworten mit einem Antwortergebnis, das einer zweithöchsten Ähnlichkeitsbewertung entspricht, als Reaktion auf den Erhalt einer negativen Stimme.

7. Server (100), der Folgendes umfasst:
ein Empfangsmodul (102), das zum Empfangen von Multiturn-Stimme konfiguriert ist, die in zeitlicher Reihenfolge eingegeben und von einem Fahrzeugbetriebssystem weitergeleitet wird, wobei die Multiturn-Stimme einen aktuellen Turn-of-Voice umfasst;
ein Berechnungsmodul (104), das zum Berechnen einer Kontextbewertung und einer NLU- (Natural Language Understanding)-Bewertung des aktuellen Tum-of-Voice gemäß der Multiturn-Stimme konfiguriert ist;
ein Erhaltungsmodul (106), das zum Erhalten eines Antwortergebnisses oder eines Ablehnungsergebnisses des aktuellen Turn-of-Voice gemäß dem aktuellen Tum-of-Voice und der Kontextbewertung und der NLU-Bewertung des aktuellen Tum-of-Voice konfiguriert ist; und
ein Durchführungsmodul (108), das zum Durchführen einer Sprachinteraktion zwischen dem Fahrzeugbetriebssystem und einem Benutzer gemäß dem Antwortergebnis oder dem Ablehnungsergebnis des aktuellen Turn-of-Voice konfiguriert ist,
wobei das genannte Berechnen der Kontextbewertung des aktuellen Tum-of-Voice gemäß der Multiturn-Stimme Folgendes beinhaltet:
Berechnen einer Schablonenkontextbewertung des aktuellen Tum-of-Voice gemäß den ein oder mehreren vorherigen Turns-of-Voice;
Berechnen einer Modellkontextbewertung des aktuellen Tum-of-Voice gemäß der Multiturn-Stimme; und
Berechnen der Kontextbewertung gemäß der Schablonenkontextbewertung und der Modellkontextbewertung des aktuellen Tum-of-Voice;
**dadurch gekennzeichnet, dass** das genannte Berechnen der Schablonenkontextbewertung des aktuellen Tum-of-Voice gemäß den ein oder mehreren vorherigen Turns-of-Voice Folgendes beinhaltet:
Erhalten einer Domänenbewertung und einer Absichtsbewertung von jedem der ein oder mehreren vorherigen Tums-of-Voice; und
Berechnen der Schablonenkontextbewertung des aktuellen Tum-of-Voice gemäß der Domänenbewertung und der Absichtsbewertung von jedem der ein oder mehreren vorherigen Turns-of-Voice, und
das genannte Berechnen der Modellkontextbewertung des aktuellen Tum-of-Voice gemäß der Multiturn-Stimme Folgendes beinhaltet:
Durchführen einer Worteinbettung an der Multiturn-Stimme gemäß einer vorbestimmten Dimension, um eine numerische Matrix zu erhalten;
Durchführen eines Faltungsprozesses an der numerischen Matrix gemäß einem Filter mit einem vorbestimmten Schritt zum Extrahieren einer Mehrzahl von Wortvektoren,
Durchführen eines Max-Pooling-Prozesses an der Mehrzahl von Wortvektoren, um eine Mehrzahl von niederdimensionalen Wortvektoren zu erhalten; und
vollständiges Verbinden und Klassifizieren der Mehrzahl von niederdimensionalen Wortvektoren, um die Modellkontextbewertung des aktuellen Turn-of-Voice zu berechnen.

8. Server (100) nach Anspruch 7, wobei die Kontextbewertung gemäß A=α^{∗}B+(l-α)^{∗}C berechnet wird, wobei A die Kontextbewertung, B die Modellkontextbewertung, C die Schablonenkontextbewertung und α eine vorbestimmte Gewichtung repräsentiert.

9. Server (100) nach Anspruch 7, wobei das genannte Berechnen der NLU-Bewertung des aktuellen Tum-ofVoice gemäß der Multiturn-Stimme Folgendes beinhaltet:
Verarbeiten des aktuellen Turn-of-Voice, um mindestens eine Domäne des aktuellen Turn-of-Voice zu erhalten; und
Bestimmen der NLU-Bewertung des aktuellen Turn-of-Voice gemäß der mindestens einen Domäne des aktuellen Tum-of-Voice.

10. Server (100) nach Anspruch 7, wobei das genannte Erhalten des Antwortergebnisses oder des Ablehnungsergebnisses des aktuellen Tum-of-Voice gemäß dem aktuellen Turn-of-Voice und der Kontextbewertung und der NLU-Bewertung des aktuellen Tum-of-Voice Folgendes beinhaltet:
Erhalten einer Liste von NLU-Kandidaten für den aktuellen Turn-of-Voice gemäß dem aktuellen Tum-of-Voice;
Berechnen einer Ähnlichkeitsbewertung der Liste von NLU-Kandidaten für den aktuellen Turn-of-Voice gemäß der Kontextbewertung und der NLU-Bewertung des aktuellen Tum-of-Voice;
Bestimmen, auf der Basis der Liste von NLU-Kandidaten für den aktuellen Turn-of-Voice, des Antwortergebnisses des aktuellen Turn-of-Voice aus einer vorbestimmten Antwortindextabelle, wenn die Ähnlichkeitsbewertung genauso groß wie oder größer als ein vorbestimmter Wert ist; und
Bestimmen des Ablehnungsergebnisses des aktuellen Turn-of-Voice, wenn die Ähnlichkeitsbewertung kleiner als der vorbestimmte Wert ist.

11. Server (100) nach Anspruch 10, der ferner Folgendes umfasst:
ein Modul, das zum Durchführen einer Abfragebestätigung in einer Reihenfolge von Werten der Ähnlichkeitsbewertungen konfiguriert ist, wenn das Antwortergebnis des aktuellen Tum-of-Voice eine Mehrzahl von Antwortergebnissen umfasst.

12. Server (100) nach Anspruch 11, wobei die genannte Durchführung der Abfragebestätigung in der Reihenfolge von Werten der Ähnlichkeitsbewertungen Folgendes beinhaltet:
zuerst Antworten mit einem Antwortergebnis, das einer höchsten Ähnlichkeitsbewertung entspricht;
Ausführen einer entsprechenden Anweisung als Reaktion auf den Erhalt einer positiven Stimme; und
Antworten mit einem Antwortresultat, das einer zweithöchsten Ähnlichkeitsbewertung entspricht, als Reaktion auf den Erhalt einer negativen Stimme.

13. Sprachinteraktionssystem (1000), das ein Fahrzeug (200) und den Server (100) nach einem der Ansprüche 7 bis 12 umfasst.

## Revendications

1. Un procédé d'interaction vocale, appliqué dans un serveur, le procédé d'interaction vocale comprenant :
la réception (S 12) de cycles vocaux multiples qui sont entrés dans un ordre temporel et transmis par un système d'exploitation de véhicule, les cycles vocaux multiples comprenant un cycle vocal actuel et un ou plusieurs cycles vocaux antérieurs,
le calcul (S14) d'un score de contexte et d'un score de compréhension du langage naturel, NLU, du cycle vocal actuel conformément aux cycles vocaux multiples,
l'obtention (S16) d'un résultat en réponse ou d'un résultat de rejet du cycle vocal actuel conformément au cycle vocal actuel et au score de contexte et au score NLU du cycle vocal actuel, et
l'exécution (S18) d'une interaction vocale entre le système d'exploitation de véhicule et un utilisateur conformément au résultat en réponse ou au résultat de rejet du cycle vocal actuel,
où ledit calcul (S14) du score de contexte du cycle vocal actuel conformément aux cycles vocaux multiples comprend :
le calcul (S22) d'un score de contexte gabarit du cycle vocal actuel conformément aux un ou plusieurs cycles vocaux antérieurs,
le calcul (S24) d'un score de contexte modèle du cycle vocal actuel conformément aux cycles vocaux multiples, et
le calcul (S26) du score de contexte conformément au score de contexte gabarit et au score de contexte modèle du cycle vocal actuel,
**caractérisé en ce que**
ledit calcul (S22) du score de contexte gabarit du cycle vocal actuel conformément aux un ou plusieurs cycles vocaux antérieurs comprend :
l'obtention (S222) d'un score de domaine et d'un score d'intention de chacun des un ou plusieurs cycles vocaux antérieurs, et
le calcul (S224) du score de contexte gabarit du cycle vocal actuel conformément au score de domaine et au score d'intention de chacun des un ou plusieurs cycles vocaux antérieurs, et
ledit calcul (S24) du score de contexte modèle du cycle vocal actuel conformément aux cycles vocaux multiples comprend :
l'exécution (S242) d'une imbrication de mots sur les cycles vocaux multiples conformément à une dimension prédéterminée de façon à obtenir une matrice numérique,
l'exécution (S244) d'un procédé de convolution sur la matrice numérique conformément à un filtre avec une opération prédéterminée d'extraction d'une pluralité de vecteurs de mots,
l'exécution (S246) d'un procédé de regroupement maximal sur la pluralité de vecteurs de mots de façon à obtenir une pluralité de vecteurs de mots à faible dimension, et
le raccordement complet et le classement (S248) de la pluralité de vecteurs de mots à faible dimension de façon à calculer le score de contexte modèle du cycle vocal actuel.

2. Le procédé d'interaction vocale selon la Revendication 1, où le score de contexte est calculé selon : A=α^{∗}B+(1-α)^{∗}C, où A représente le score de contexte, B représente le score de contexte modèle, C représente le score de contexte gabarit et α représente un poids prédéterminé.

3. Le procédé d'interaction vocale selon la Revendication 1, où ledit calcul (S14) du score NLU du cycle vocal actuel conformément aux cycles vocaux multiples comprend :
le traitement (S32) du cycle vocal actuel de façon à obtenir au moins un domaine du cycle vocal actuel, et
la détermination (S34) du score NLU du cycle vocal actuel conformément au au moins un domaine du cycle vocal actuel.

4. Le procédé d'interaction vocale selon la Revendication 1 où ladite obtention (S 16) du résultat en réponse ou du résultat de rejet du cycle vocal actuel conformément au cycle vocal actuel et au score de contexte et au score NLU du cycle vocal actuel comprend :
l'obtention (S 162) d'une liste de candidats NLU pour le cycle vocal actuel conformément au cycle vocal actuel,
le calcul (S164) d'un score de similarité de la liste de candidats NLU pour le cycle vocal actuel conformément au score de contexte et au score NLU du cycle vocal actuel,
la détermination (S 166), en fonction de la liste de candidats NLU pour le cycle vocal actuel, du résultat en réponse du cycle vocal actuel à partir d'une table d'indices de réponse prédéterminés, lorsque le score de similarité est supérieur ou égal à une valeur prédéterminée, et
la détermination (S 168) du résultat de rejet du cycle vocal actuel lorsque le score de similarité est inférieur à la valeur prédéterminée.

5. Le procédé d'interaction vocale selon la Revendication 4, comprenant en outre :
l'exécution (S167) d'une confirmation de sondage dans un ordre de valeurs des scores de similarité lorsque le résultat en réponse du cycle vocal actuel comprend une pluralité de résultats en réponse.

6. Le procédé d'interaction vocale selon la Revendication 5, où ladite exécution (S167) de la confirmation de sondage dans l'ordre de valeurs des scores de similarité comprend :
l'apport d'une réponse avec un résultat en réponse correspondant à un score de similarité le plus élevé en premier lieu,
l'exécution d'une instruction correspondante en réponse à l'obtention d'une voix positive,
l'apport d'une réponse avec un résultat en réponse correspondant à un deuxième score de similarité le plus élevé en réponse à l'obtention d'une voix négative.

7. Un serveur (100), comprenant :
un module de réception (102) configuré de façon à recevoir des cycles vocaux multiples qui sont entrés dans un ordre temporel et transmis par un système d'exploitation de véhicule, les cycles vocaux multiples comprenant un cycle vocal actuel,
un module de calcul (104) configuré de façon à calculer un score de contexte et un score de compréhension du langage naturel, NLU, du cycle vocal actuel conformément aux cycles vocaux multiples,
un module d'obtention (106) configuré de façon à obtenir un résultat en réponse ou un résultat de rejet du cycle vocal actuel conformément au cycle vocal actuel et au score de contexte et au score NLU du cycle vocal actuel, et
un module d'exécution (108) configuré de façon à exécuter une interaction vocale entre le système d'exploitation de véhicule et un utilisateur conformément au résultat en réponse ou au résultat de rejet du cycle vocal actuel,
où ledit calcul du score de contexte du cycle vocal actuel conformément aux cycles vocaux multiples comprend :
le calcul d'un score de contexte gabarit du cycle vocal actuel conformément aux un ou plusieurs cycles vocaux antérieurs,
le calcul d'un score de contexte modèle du cycle vocal actuel conformément aux cycles vocaux multiples, et
le calcul du score de contexte conformément au score de contexte gabarit et au score de contexte modèle du cycle vocal actuel,
**caractérisé en ce que** ledit calcul du score de contexte gabarit du cycle vocal actuel conformément aux un ou plusieurs cycles vocaux antérieurs comprend :
l'obtention d'un score de domaine et d'un score d'intention de chacun des un ou plusieurs cycles vocaux antérieurs, et
le calcul du score de contexte gabarit du cycle vocal actuel conformément au score de domaine et au score d'intention de chacun des un ou plusieurs cycles vocaux antérieurs, et
ledit calcul du score de contexte modèle du cycle vocal actuel conformément aux cycles vocaux multiples comprend :
l'exécution d'une imbrication de mots sur les cycles vocaux multiples conformément à une dimension prédéterminée de façon à obtenir une matrice numérique,
l'exécution d'un procédé de convolution sur la matrice numérique conformément à un filtre avec une opération prédéterminée d'extraction d'une pluralité de vecteurs de mots,
l'exécution d'un procédé de regroupement maximal sur la pluralité de vecteurs de mots de façon à obtenir une pluralité de vecteurs de mots à faible dimension, et
le raccordement complet et le classement de la pluralité de vecteurs de mots à faible dimension de façon à calculer le score de contexte modèle du cycle vocal actuel.

8. Le serveur (100) selon la Revendication 7, où le score de contexte est calculé selon : A=α^{∗}B+(1-α)^{∗}C, où A représente le score de contexte, B représente le score de contexte modèle, C représente le score de contexte gabarit et α représente un poids prédéterminé.

9. Le serveur (100) selon la Revendication 7, où ledit calcul du score NLU du cycle vocal actuel conformément aux cycles vocaux multiples comprend :
le traitement du cycle vocal actuel de façon à obtenir au moins un domaine du cycle vocal actuel, et
la détermination du score NLU du cycle vocal actuel conformément au au moins un domaine du cycle vocal actuel.

10. Le serveur (100) selon la Revendication 7, où ladite obtention du résultat en réponse ou du résultat de rejet du cycle vocal actuel conformément au cycle vocal actuel et au score de contexte et au score NLU du cycle vocal actuel comprend :
l'obtention d'une liste de candidats NLU pour le cycle vocal actuel conformément au cycle vocal actuel,
le calcul d'un score de similarité de la liste de candidats NLU pour le cycle vocal actuel conformément au score de contexte et au score NLU du cycle vocal actuel,
la détermination, en fonction de la liste de candidats NLU pour le cycle vocal actuel, du résultat en réponse du cycle vocal actuel à partir d'une table d'indices de réponse prédéterminés lorsque le score de similarité est supérieur ou égal à une valeur prédéterminée, et
la détermination du résultat de rejet du cycle vocal actuel lorsque le score de similarité est inférieur à la valeur prédéterminée.

11. Le serveur (100) selon la Revendication 10 comprenant en outre :
un module configuré de façon à exécuter une confirmation de sondage dans un ordre de valeurs des scores de similarité lorsque le résultat en réponse du cycle vocal actuel comprend une pluralité de résultats en réponse.

12. Le serveur (100) selon la Revendication 11, où ladite exécution de la confirmation de sondage dans l'ordre de valeurs des scores de similarité comprend :
l'apport d'une réponse avec un résultat en réponse correspondant à un score de similarité le plus élevé en premier lieu,
l'exécution d'une instruction correspondante en réponse à l'obtention d'une voix positive, et
l'apport d'une réponse avec un résultat en réponse correspondant à un deuxième score de similarité le plus élevé en réponse à l'obtention d'un voix négative.

13. Un système d'interaction vocale (1000), comprenant un véhicule (200) et le serveur (100) selon l'une quelconque des Revendications 7 à 12.
